# EUROPÄISCHE PATENTANMELDUNG

(11) **EP 2 446 730 A1**
(43) Veröffentlichungstag der Anmeldung: **02.05.2012**
(21) Anmeldenummer: 11001675.5
(22) Anmeldetag: 01.03.2011
(51) Int. Cl.: A01D 78/10, A01B 73/04

(54) **Vorrichtung zur Verhinderung des Auseinanderfaltens eines Kreiselschwaders bei unebenen Bodenverhältnissen**

(30) Priorität: 29.10.2010 DE 102010046940
(71) Anmelder: CLAAS Saulgau GmbH, 88348 Bad Saulgau (DE)
(72) Erfinder: Menz, Thomas, 88524 Uttenweiler (DE); Prenzler, Jürgen, 88379 Unterwaldhausen (DE)

(57) **Zusammenfassung**

Vorrichtung für eine landwirtschaftliche Bearbeitungsmaschine, insbesondere für einen Schwader die es ermöglicht, die ausgeschwenkten sich in der Arbeitsstellung befindlichen Schwadkreiselarme (2 und 9) von einer Arbeitsstellung in eine Transportstellung zu überführen und diese in der Transportsicherungsstellung (8) mit Hilfe eines Schwerkraftriegels (4) transportstabil zu fixieren.

## Beschreibung

Die Erfindung betrifft eine Vorrichtung die das unbeabsichtigte Auseinanderfalten einer landwirtschaftlichen Bearbeitungsmaschine, insbesondere einer Heuwerbungsmaschine, nach dem Oberbegriff des Anspruches 1 und des Anspruches 2 verhindern soll.

### Stand der Technik

Bei landwirtschaftlichen Bearbeitungsmaschinen spielen die zum Transport auf öffentlichen Strassen zulässigen Transportmasse eine besonders wichtige Rolle. Es ist daher notwendig, die in Arbeitsstellung weit ausladenden landwirtschaftlichen Bearbeitungsmaschinen auf ein Format falten zu können, das den Vorgaben der StVO genügt und einen sicheren Transport in der Transportstellung sowohl auf öffentlichen Straßen als auch über häufig unbefestigten und unebenen Grund hin zur Agrarfläche zu ermöglichen. Bekannt sind hydraulische als auch mechanische Vorrichtungen die ein unbeabsichtigtes Auseinanderklappen landwirtschaftlicher Bearbeitungsmaschinen nach erreichen der Transportstellung verhindern sollen. Hydraulische Lösungen sind zur Lösung der Aufgabe jedoch sehr kosten- und wartungsintensiv und werden daher nur selten zur Anwendung gebracht. Auch darf die Störanfälligkeit solcher Systeme nicht unterschätzt werden. Die wesentlich günstigeren mechanischen Lösungen haben den Nachteil, dass sie von dem Bedienpersonal manuell bedient werden müssen, was auch zu Fehlbedienungen führen kann.

### Aufgabenstellung

Hier setzt die Aufgabe der Erfindung an mit dem Ziel, eine Verriegelung aufzuzeigen, die sowohl in der Herstellung als auch im praktischen Einsatz alle an eine solche Vorrichtung gestellten Anforderungen erfüllt und darüber hinaus kostengünstig herzustellen ist und keine Wartung verlangt. Außerdem muss die Verriegelung innerente Eigenschaften aufweisen d.h. die Verriegelung muss Fehlbedienungen des Bedienpersonals egalisieren bzw. diese verhindern.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Landwirtschaftliche Bearbeitungsmaschine, welche durch s.g. Knickgelenke mit Hilfe einer hydraulischen Steuerung von einer Arbeitsstellung in einen Transportstellung überführt werden kann gekennzeichnet dadurch, dass durch einen speziell ausgeformten Schwerkraftriegel der an dem ersten d.h. dem am nächsten zur Längsmittelachse liegenden Schwadkreiselarm befestigt ist, es ermöglicht, eine mechanische Arretierung in einer transportstabilen Lage des von der Längsmittelachse am weitesten entfernten Schwadkreiselarmes nach dem Faltvorgang über den am nächsten zur Längsmittelachse liegende Schwadkreiselarm zu erreichen und dadurch ein ungewolltes Auffalten bzw. Schwingen der Schwadkreiselarme nach Überführung in die Endstellung und somit Transportstellung zu verhindern. Durch die hakenartige Ausbildung des Schwerkraftriegels sowie der gegebenen Möglichkeit den Schwerkraftriegel nahezu um 360° um den Drehpunkt zu verschwenken ist es möglich, das sowohl die Arretierung zum fixieren in der Transportsicherungsstellung als auch die Freigabe und das Verbringen in die Arbeitsstellung ohne das Zutun von Bedienpersonal alleine durch die Nutzung der Schwerkraft möglich wird. Dieser v.g. Ablauf des Einklappens als auch des Aufklappens der Schwadkreiselarme werden synchron auch von den gegenüber der Längsmittelachse befindlichen Schwadkreiselarmen vollzogen. Die Endstellung des Schwerkraftriegel wird durch einen Anschlag bewirkt welcher den Schwerkraftriegel nach dem Aufklappen und erreichen der Arbeitsstellung in eine Position überführt, die es ermöglicht beim Klappvorgang in die Transportstellung den Schwerkraftriegel in die gewünschte Position zu verbringen d.h. das der Schwerkraftriegel den Arretierungsdorn zumindest teilweise umschliesst.

Die Erfindung wird an Hand der Zeichnung besonders vorteilhafter Ausführungsformen der Erfindung beschrieben. Es zeigt:
- Fig. 1: ein landwirtschaftliches Gerät in Arbeitsteilung mit entlastetem Schwerkraftriegel in Arbeitsstellung,
- Fig. 1-1: eine Detailansicht eines landwirtschaftlichen Gerätes wie vorgenannt in Arbeitstellung mit entlastetem Schwerkraftriegel,
- Fig. 2: ein landwirtschaftliches Gerät mit aussenliegenden Schwadkreiselarmen die bereits über die mittleren Schwadkreiselarme geklappt wurden,
- Fig. 2-1: eine Detailansicht eines landwirtschaftlichen Gerätes wie vorgenannt mit aussenliegenden Schwadkreiselarmen die bereits über die mittleren Schwadkreiselarme geklappt wurden,
- Fig. 3: ein landwirtschaftliches Gerät in Transportstellung mit arretiertem Schwerkraftriegel,
- Fig. 3-1: eine Teilansicht eines landwirtschaftlichen Gerätes in Transportstellung mit arretiertem Schwerkraftriegel,
- Fig. 3-2: eine Detailansicht eines landwirtschaftlichen Gerätes in Transportstellung mit arretiertem Schwerkraftriegel,

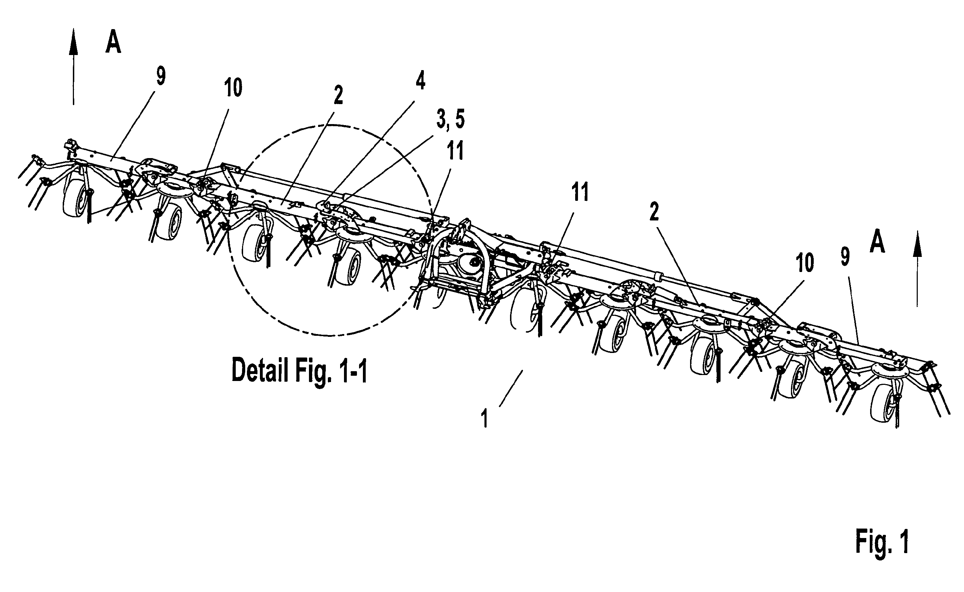

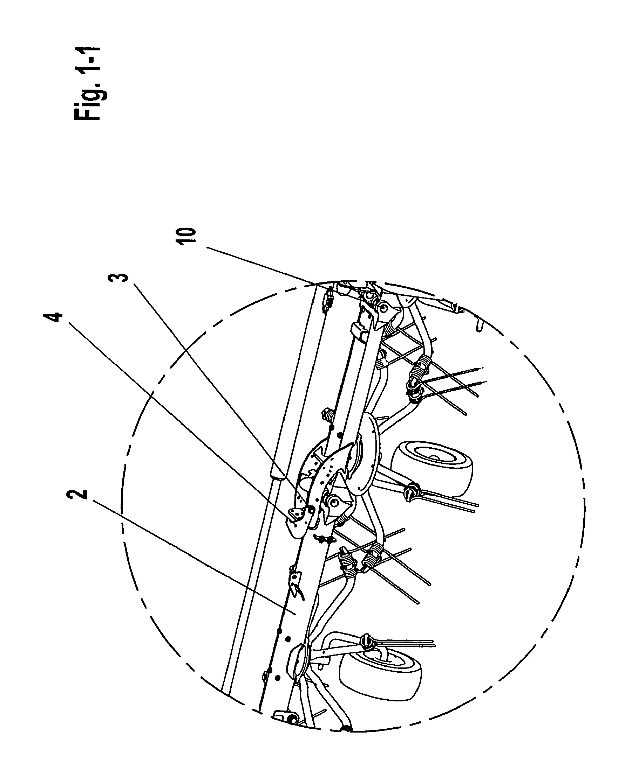

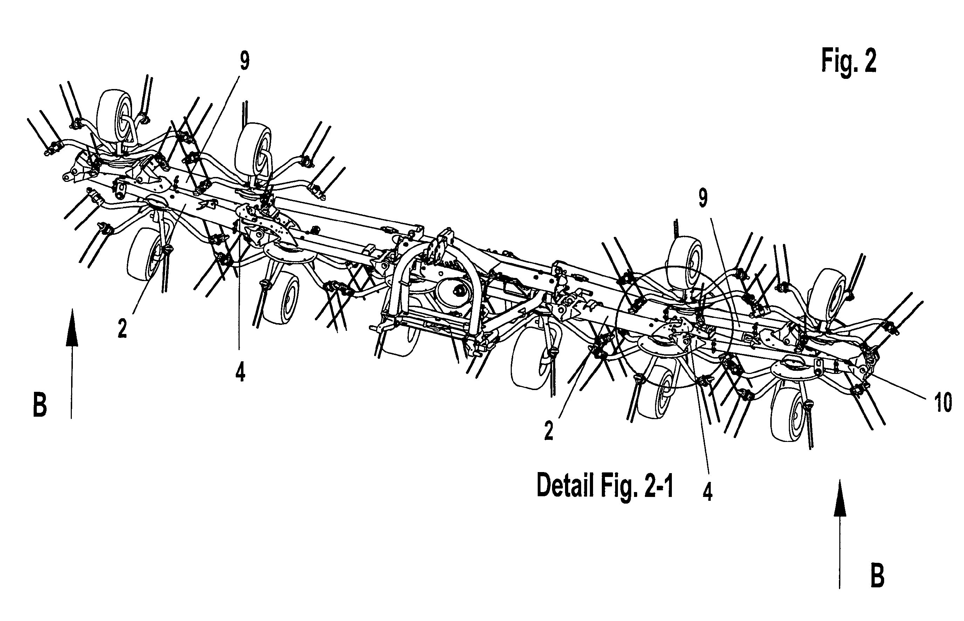

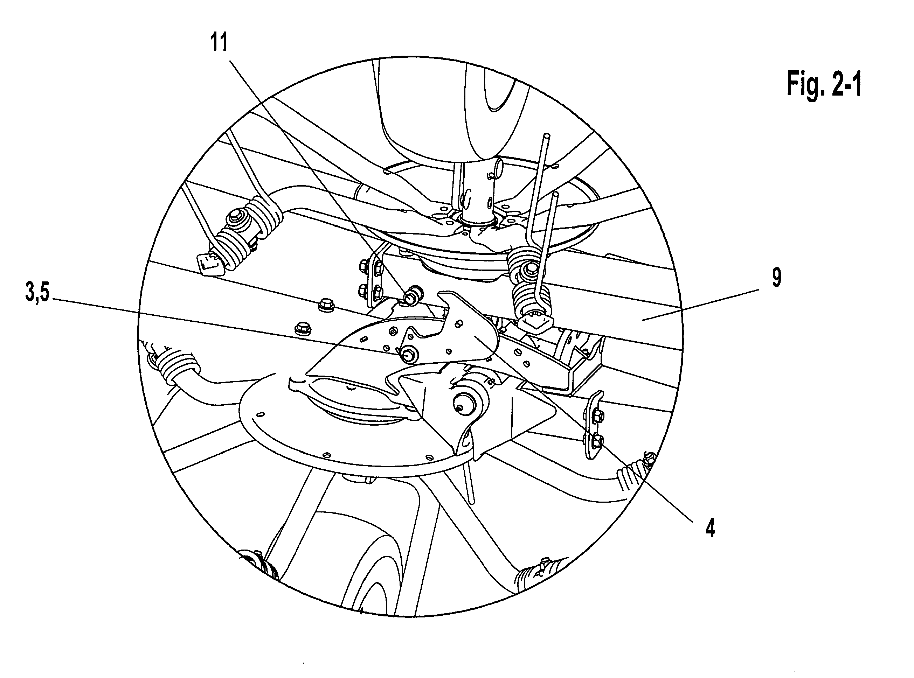

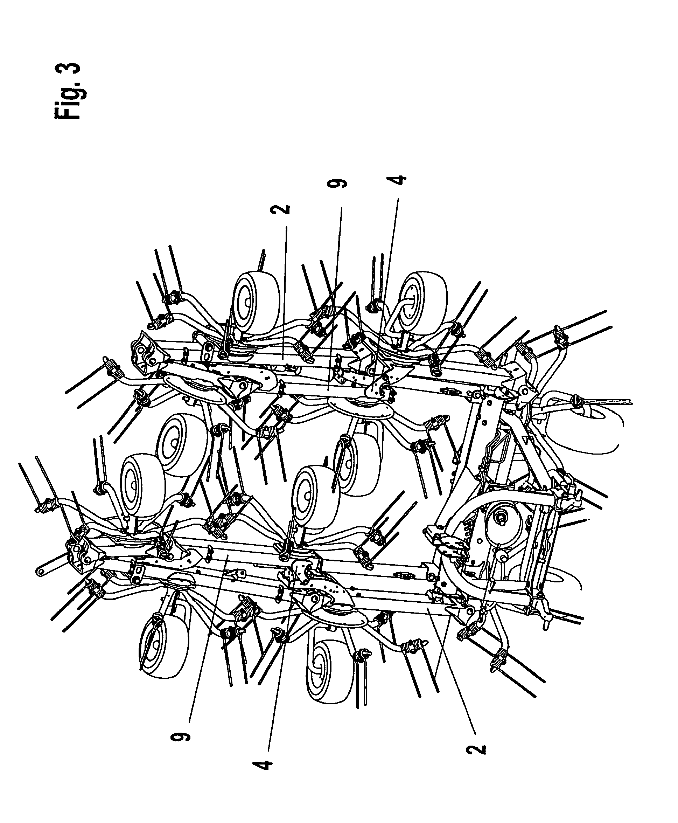

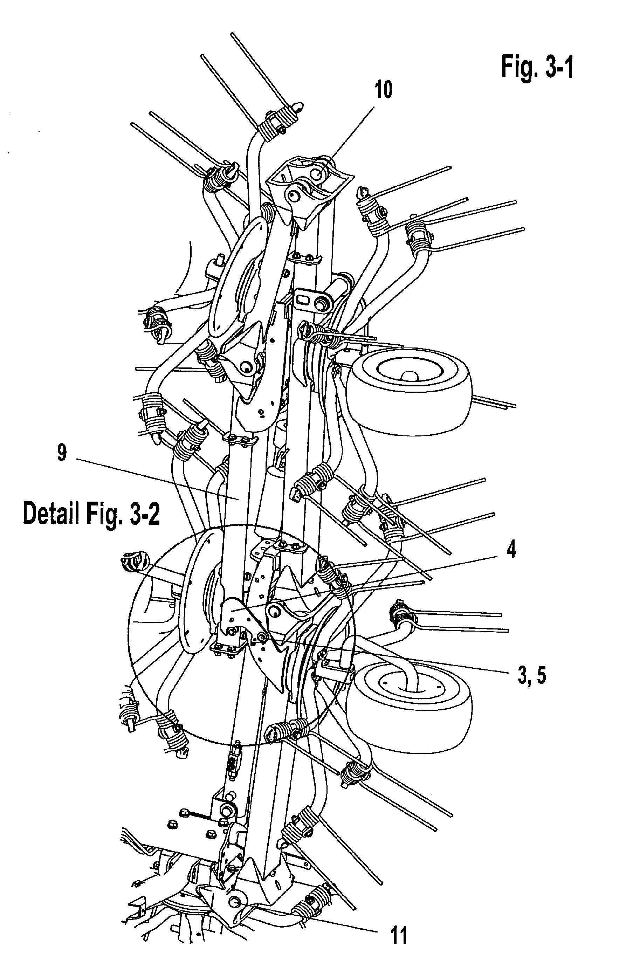

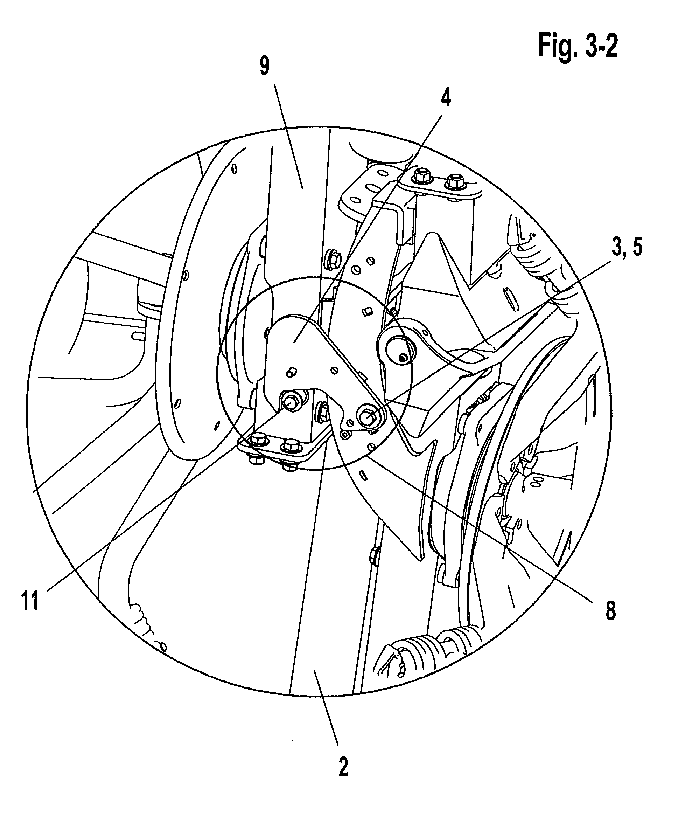

Ein in Arbeitstellung befindliche landwirtschaftliche Bearbeitungsmaschine 1 insbesondere Schwader (Fig. 1) welches im Bereich des mittleren Schwadkreiselarmes 2 einen Befestigungspunkt 3 für einen Schwerkraftriegel 4 aufweisst der gleichzeitig als Drehpunkt 5 dient, und bei dem die Ruhestellung 6 des Schwerkraftriegels 4 durch einen Begrenzungsdorn 7 so vorgegeben wird (Fig. 1 und Detailansicht Fig. 1-1), das der Schwerkraftriegel 4 einzig durch die Schwerkraft von der Ruhestellung 6 in die zur Verriegelung notwendige Transportsicherungsstellung 8 gebracht werden kann und um dies zu erreichen die jeweils aussenliegenden Schwadkreiselarme 9 mittels Knickgelenken 10 in einem ersten Schritt und Drehrichtung A (Fig. 1) in eine vorläufige Position über die Schwadkreiselarme 2 gebracht werden können (Fig. 2 und Detailansicht Fig. 2-1) und in einem letzten Schritt mittels der Knickgelenke 11 und Drehrichtung B in die Transportsicherungsstellung überführt werden können (Fig. 3. und Detailansicht Fig. 3-2). In der Fig. 3-2 ist der Schwerkraftriegel 4 in der Endlage d.h. der Transportsicherungsstellung 8 zu sehen. Der Schwerkraftriegel 4 umschliesst hierbei den Arretierungsbolzen 11 zumindest teilweise. In der Fig. 3-1 ist die v.g. Situation noch einmal in der Gesamtschau reduziert auf einen Flügel der landwirtschaftlichen Bearbeitungsmaschine 1 zu erkennen.

### Bezugszeichenliste

### Legende

- 1: Landwirtschaftliche Bearbeitungsmaschine
- 2: mittlere Schwadkreiselarme
- 3: Befestigungspunkt
- 4: Schwerkraftriegel
- 5: Drehpunkt
- 6: Ruhestellung
- 7: Begrenzungsdorn
- 8: Schwerkraftriegel in Transportsicherungsstellung
- 9: aussenliegende Schwadkreiselarme
- 10: Knickgelenke
- 11: Arretierungsbolzen
- A: Drehrichtung in Zwischenposition
- V: Drehrichtung in Transportstellung

## Patentansprüche

1. Vorrichtung für eine landwirtschaftliche Bearbeitungsmaschine, insbesondere für einen Schwader die es ermöglicht, die ausgeschwenkten sich in der Arbeitsstellung befindlichen Schwadkreiselarme (2 und 9) von einer Arbeitsstellung in eine Transportstellung zu überführen und diese in der Transportstellung mit Hilfe eines Schwerkraftriegels transportstabil zu fixieren,
**dadurch gekennzeichnet, dass** mindestens einer oder mehrere Schwerkraftriegel (4) an dem zweiten durch ein Knickgelenk (10) getrennten zur Längsmittelachse liegenden Schwadkreiselarm (2) montiert ist.

2. Landwirtschaftliche Bearbeitungsmaschine nach Anspruch 1 **dadurch gekennzeichnet, dass** eine endgültige transportstabile Lage erst mit dem Eingriff der Aufnahmeöffnung des Schwerkraftriegels (4) in den an dem aussenliegenden Schwadkreiselarm (9) montierten Arretierungsbolzen (11) vollzogen wird.

3. Landwirtschaftliche Bearbeitungsmaschine nach Anspruch 1 **dadurch gekennzeichnet, dass** ein drehbar gelagerter Schwerkraftriegel (4) mit Hilfe eines Begrenzungsdornes (7) in einer Ruhestellung (6) gehalten wird, die es dem Schwerkraftriegel (4) ermöglicht bei dem Klappvorgang von der Arbeitsstellung in die Transportstellung alleine durch die Schwerkraft die Aufnahmeöffnung des Schwerkraftriegels (4) in den Eingriff mit dem an den aussenliegenden Schwadkreiselarmen (9) montierten Arretierungsbolzen (11) zu bringen.

4. Landwirtschaftliche Bearbeitungsmaschine nach Anspruch 1 **dadurch gekennzeichnet, dass** mindestens einer oder mehrere drehbar gelagerte Schwerkraftriegel (4) in Abhängigkeit der Länge des Schwadkreiselarmes (2 und 9) mit Hilfe eines Begrenzungsdornes (7) in einer Ruhestellung (6) vorgehalten werden, die es dem Schwerkraftriegel (4) ermöglicht bei dem Klappvorgang von der Arbeitsstellung in die Transportstellung alleine durch die Schwerkraft die Aufnahmeöffnung des Schwerkraftriegels (4) in den Eingriff mit den an den aussenliegenden Schwadkreiselarmen (9) montierten Arretierungsbolzen (11) zu bringen.
